# EUROPÄISCHE PATENTSCHRIFT

(11) **EP 2 944 966 B1**
(45) Veröffentlichungstag und Bekanntmachung des Hinweises auf die Patenterteilung: **10.07.2019**
(21) Anmeldenummer: 14168384.7
(22) Anmeldetag: 15.05.2014
(51) Int. Cl.: G01P 15/093, B23Q 17/12, F16F 15/03, G01P 1/00, G01H 9/00

(54) **Vibrationssensor**
Vibration sensor
Capteur de vibrations

(43) Veröffentlichungstag der Anmeldung: 18.11.2015
(73) Patentinhaber: ETEL S.A., 2112 Môtiers (CH)
(72) Erfinder: Galdos, Gorka, 1400 Yverdon-les-bains (CH); Tamigniaux, Philippe, 25500 Morteau (FR); Morel, Jean-Pierre, 25300 Les Fourgs (FR); Kranitzky, Walter, 83278 Traunstein (DE)
(74) Vertreter: Pleyer, Hans Anno

(56) Entgegenhaltungen:
- EP-A1- 2 075 484
- WO-A1-87/06347
- JP-A- 2003 107 104
- US-A- 5 047 629
- US-A1- 2004 060 355
- US-A1- 2007 062 284
- US-A1- 2007 165 907
- US-A1- 2007 261 489
- US-A1- 2012 050 735

## Beschreibung

### GEBIET DER TECHNIK

Die vorliegende Erfindung betrifft einen Vibrationssensor. Solche Vibrationssensoren spielen in vielen Gebieten der Technik eine Rolle. So beruhen z.B. Systeme zur aktiven Schwingungsisolierung auf einer Vibrations- bzw. Schwingungsmessung, die es erst ermöglicht, unerwünschte Schwingungen aktiv zu dämpfen. Ein weiteres Anwendungsgebiet von Vibrationssensoren ist die Ermittlung der Unwucht von rotierenden Achsen, beispielsweise in Werkzeugmaschinen.

### STAND DER TECHNIK

Eine Anwendung von Vibrationssensoren ist aus der EP 2719499 A1 bekannt, gemäß der die Unwucht einer rotierenden Achse einer Werkzeugmaschine mittels eines Vibrationssensors überwacht wird, der am stationären Teil eines Bearbeitungszentrums mit rotierenden Achsen angeordnet ist. Einleitend werden auch andere Anordnungen des Vibrationssensors diskutiert, etwa unmittelbar an einem Drehtisch.

Im technischen Gebiet der aktiven Schwingungsisolation, zu dem in der Einleitung der EP 2075484 A1 ein guter Überblick gegeben wird, kommen bisher oft sogenannte Geophone zum Einsatz. Das sind im Wesentlichen Sensoren, in denen ein federnd gelagerter Magnet als Testmasse durch äußere Anregung in Schwingung versetzt wird. Spulen in der Nähe des Magneten geben dabei ein der Geschwindigkeit proportionales Spannungssignal ab. Solche induktiven Sensoren haben aber den Nachteil, dass der Signal/Rauschabstand bei niedrigen Schwingungsfrequenzen klein wird, denn niedrige Frequenz bedeutet eine langsame Bewegung des Magneten relativ zur Spule, und damit nur eine kleine induzierte Spannung. Geophone zur exakten Erfassung von Schwingungen unterhalb von 4 Hz sind nur sehr schwer erhältlich. In dieser Größenordnung liegen aber auch die Eigenfrequenzen von Plattformen, auf denen bewegte Vorrichtungen aufgebaut sind, und die möglichst nicht zu Schwingungen angeregt werden sollen, weder durch externe Einflüsse wie ein schwingender Untergrund, noch durch interne Anregungen durch die bewegte Vorrichtung selbst. Systeme zur aktiven Schwingungsisolation messen daher die Schwingungen der Plattform und dämpfen diese aktiv, z.B. mittels Aktoren, die zwischen der Plattform und dem Untergrund wirken.

Es wurde daher z.B. in der EP 2075484 A1 bereits vorgeschlagen, anstelle der für Rauschen anfälligen induktiven Geschwindigkeitssensoren Positionsmessgeräte zu verwenden, die die Bewegung einer Testmasse auch bei sehr langsamen Bewegungen erfassen können, ohne dass dabei zusätzliches Rauschen auftritt. Die Auslenkung einer Testmasse lässt sich auch bei sehr langsamen Bewegungen (sogar im Stillstand) mit einem Positionsmessgerät jederzeit feststellen, so dass niedrige Frequenzen den Signal/Rauschabstand nicht beeinträchtigen.

So offenbart die US 6473187 B1 so einen Vibrationssensor mit einem Masseblock, der mittels einer Blattfeder relativ zu einem Rahmen in einer Messrichtung beweglich gelagert ist, wobei eine Verschiebung des Masseblocks relativ zum Rahmen mittels eines Positionsmessgerätes erfassbar ist. Am Masseblock und am Rahmen sind dabei kammartig ineinander greifende Finger angeordnet, die zusammen ein regelmäßiges Gitter ergeben, an dem Licht einer Lichtquelle in verschiedene Beugungsordnungen reflektiert und dann mittels eines Detektors detektiert wird. Bei einer Auslenkung der Testmasse ändert sich die effektive Periode des Gitters und somit die Verteilung des Lichtes in die verschiedenen Beugungsordnungen. Aus den Detektorsignalen kann daher auf die Auslenkung der Testmasse geschlossen werden. Die als optisches Gitter wirkenden, fingerartigen und freitragenden Strukturen sind allerdings nicht einfach herzustellen, und die insbesondere für eine hochgenaue Positionsmessung üblichen Gitterperioden von weniger als einem Mikrometer sind mit solchen Strukturen nicht zu erreichen.

In den Dokumenten US 2007/0062284 A1, US 2007/0165907 A1, sowie in der US 2007/0261489 A1 sind Beschleunigungssensoren offenbart, bei denen mittels eines Bildsensors die Position einer elastisch aufgehängten Masse relativ zu einem Rahmen festgestellt und daraus eine Beschleunigung ermittelt wird. Die Sensoren sind zum Einsatz beispielsweise in Mobiltelefonen gedacht und für die dort auftretenden Beschleunigungen und Frequenzen optimiert. Zur aktiven Dämpfung von Schwingungen an schwingungsisolierten Plattformen sind sie von ihrem Frequenzbereich und ihrer Genauigkeit her eher nicht geeignet.

Die JP 2003107104 A und die US 2004/0060355 A1 offenbaren jeweils einen Vibrationssensor in miniaturisierter Bauweise, bei dem die Position einer federnd gelagerten Masse mittels eines Positionsmessgerätes gemessen wird.

Die US 2012/0050735 A1 offenbart einen Kraftsensor, der darauf beruht, die Lage eines federnd gelagerten Objekts zu ermitteln. Dieses Objekt trägt eine Struktur, die einfallendes Licht abhängig von deren Ausrichtung in unterschiedlicher Weise reflektiert.

Die US 5047629 beschreibt einen Lage-, Geschwindigkeits- und Beschleunigungssensor, bei dem die Position einer mittels Blattfedern gehaltenen Testmasse innerhalb eines abgeschlossenen Gehäuses mit einem Positionsmessgerät festgestellt wird. Möchte man mit so einem Sensor Vibrationen messen, werden gerade bei niedrigen Anregungsfrequenzen die Eigenfrequenzen des Sensors problematisch, der ja wegen seiner Blattfedern selbst ein schwingungsfähiges System darstellt

Aus der WO 87/06347 ist ein Beschleunigungssensor mit einem Masseblock bekannt, der mittels einer Biegefeder relativ zu einer Grundplatte in einer Messrichtung beweglich gelagert ist, wobei durch eine Beschleunigung eine Verschiebung des Masseblocks in Messrichtung bewirkt wird, die mittels eines magnetischen Positionsmessgerätes erfasst wird. Am Ende des Masseblocks ist eine Wirbelstromscheibe angebracht, die zusammen mit Dämpfungsmagneten mit unterschiedlicher magnetischer Ausrichtung die Bewegungen des Masseblocks durch eine Wirbelstrombremsung dämpfen. Die Dämpfungsmagnete sind in einem käfigförmigen Flussleitstück angeordnet.

Kommerziell verfügbare Positionsmessgeräte, die ausführlich z.B. im Fachbuch "Digital Linear and Angular Metrology", verlag moderne industrie, Landsberg/Lech, 1998, beschrieben sind, weisen eine Maßverkörperung mit feinen periodischen Strukturen auf, die von einem relativ zur Maßverkörperung bewegten Abtastkopf abgetastet werden. Die periodischen Strukturen können beispielsweise eine Modulation der Reflektivität bewirken, die sich mittels Licht abtasten lässt. Dabei werden bereits Maßverkörperungen mit Teilungsperioden unterhalb von einem Mikrometer eingesetzt. Durch die Anwendung interferentieller Abtastung mit monochromatischem Licht und weiterer Unterteilung der periodischen Detektorsignale mittels Interpolation lassen sich Positionsänderungen im Nanometerbereich feststellen.

### ZUSAMMENFASSUNG DER ERFINDUNG

Es ist Aufgabe der Erfindung, einen optimierten Vibrationssensor zu schaffen, der vor allem bei niedrigen Anregungsfrequenzen eine sehr gute Detektion der Vibrationen ermöglicht.

Diese Aufgabe wird gelöst durch eine Vorrichtung gemäß Anspruch 1. Vorteilhafte Details dieser Vorrichtung und deren vorteilhafte Verwendung ergeben sich auch aus den von Anspruch 1 abhängigen Ansprüchen.

Es wird ein Vibrationssensor mit einem Masseblock beschrieben, der mittels wenigstens einer Feder relativ zu einem Rahmen in einer Messrichtung beweglich gelagert ist, wobei eine Verschiebung des Masseblocks relativ zum Rahmen mittels eines Positionsmessgerätes erfassbar ist. Das Positionsmessgerät umfasst eine Maßverkörperung und einen auf die Maßverkörperung ausgerichteten Abtastkopf. Die eine dieser beiden Komponenten ist am Masseblock, die andere am Rahmen befestigt.

Durch die Integration eines als Standardkomponente verfügbaren Positionsmessgerätes in den Vibrationssensor werden verschiedene Vorteile erzielt. So stehen Positionsmessgeräte mit höchster Auflösung zur Verfügung, die gezielt nach der benötigten Genauigkeit ausgewählt und in den Vibrationssensor eingebaut werden können. Eine separate Entwicklung und Optimierung des Abtastprinzips des Positionsmessgerätes wie im Stand der Technik ist nicht notwendig. Zudem verfügen solche Positionsmessgeräte über standardisierte Schnittstellen, so dass auch der Entwicklungsaufwand für eine Folgeelektronik niedriger ausfällt.

Dies gilt für die besonders vorteilhafte Verwendung solcher Vibrationssensoren zur aktiven Schwingungsdämpfung einer Plattform, bei der die gemessene Vibration als Ausgangspunkt für die Ansteuerung von Aktoren dient, die unerwünschten Vibrationen entgegen wirken.

Sehr nützlich ist die standardisierte Schnittstelle auch für Anwendungen, in denen der Vibrationssensor zur Ermittlung der Unwucht von rotierenden Achsen an numerisch gesteuerten Werkzeugmaschinen verwendet wird. Numerische Steuerungen für solche Werkzeugmaschinen weisen zahlreiche Eingänge zum Anschluss von Positionsmessgeräten auf, so dass ein solcher Vibrationssensor sehr einfach in Betrieb genommen werden kann.

Die mechanische Übertragungsfunktion solcher Vibrationssensoren lässt sich mit verschiedenen Maßnahmen an den jeweiligen Anwendungsfall anpassen. So lässt sich für den als Testmasse dienenden Masseblock eine Wirbelstrombremse zur Schwingungsdämpfung integrieren. Ist die wenigstens eine den Masseblock beweglich haltende Blattfeder durch die Gewichtskraft des Masseblocks vorgespannt, lassen sich durch zusätzliche Magnete im Vibrationssensor Kräfte einstellen, die dieser Gewichtskraft entgegen wirken oder diese sogar vollständig kompensieren.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigen
- die Figuren 1 - 4: verschiedene Ansichten eines ersten Ausführungsbeispiels der Erfindung,
- die Figuren 5 - 6: verschiedene Ansichten eines zweiten Ausführungsbeispiels der Erfindung.

### BESCHREIBUNG DER AUSFÜHRUNGSFORMEN

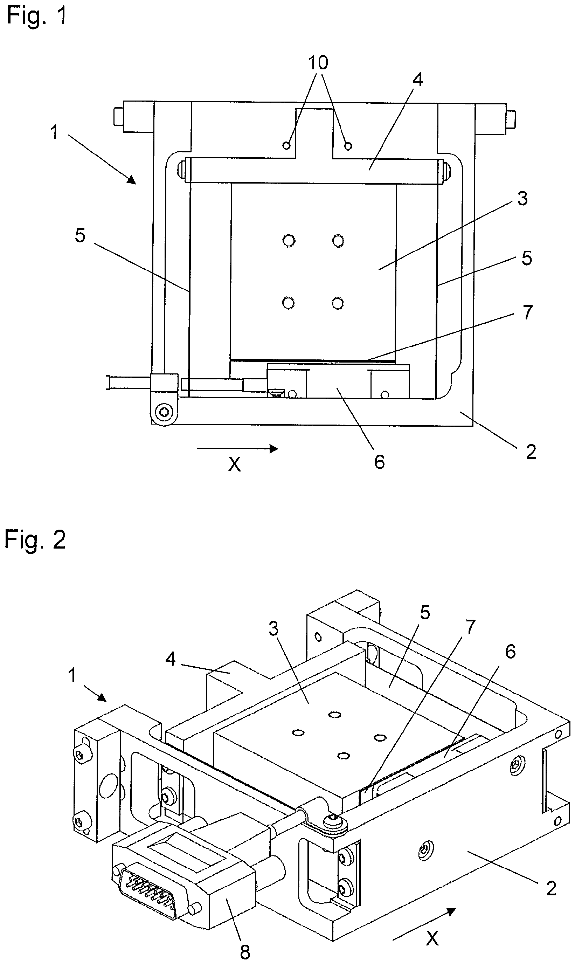

Die Figuren 1 bis 4 zeigen verschiedene Ansichten eines ersten Ausführungsbeispiels des Vibrationssensors 1, das sich vor allem für den horizontalen Einbau eignet, also für einen Vibrationssensor, der Vibrationen in einer horizontaler Messrichtung X misst. Dieser weist einen stabilen, rechteckigen Rahmen 2 auf, an und in dem die Komponenten des Vibrationssensors 1 angeordnet und zueinander ausgerichtet sind.

Als Testmasse für den Vibrationssensor 1 dient ein quaderförmiger Masseblock 3, der mittels eines T-förmigen Trägers 4 und zweier Blattfedern 5 am Rahmen befestigt ist. Der Masseblock 3 ist dabei mit dem Träger 4 fest verbunden. An seitlich über den Masseblock 3 ragenden Schenkeln des Trägers 4 sind die Blattfedern 5 befestigt. Die Blattfedern 5 sperren bis auf eine Beweglichkeit in der Messrichtung X alle Freiheitsgrade des Masseblocks 3.

Für Beschleunigungen mit einer Frequenz nahe 0 Hz gilt: eine Beschleunigung des Vibrationssensors 1 in Messrichtung X bewirkt eine der Beschleunigung und der trägen Masse des Masseblocks 3 proportionale Kraft, welche die Blattfedern 5 verbiegt und den Masseblock 3 in Messrichtung X auslenkt. Da die Masse des Masseblocks 3 unveränderlich ist, und für kleine Auslenkungen des Masseblocks das Hookesche Gesetz gilt, ist die Auslenkung des Masseblocks 3 in Messrichtung X der Beschleunigung direkt proportional.

Die Blattfedern 5 sind bei horizontalem Einbau des Vibrationssensors 1 in ihrer Längsrichtung auf Druck belastet, sie werden durch das Gewicht des Masseblocks 3 gestaucht. Hierdurch ändert sich ihr Elastizitätsmodul. Verglichen mit einer nicht gestauchten Blattfeder wird eine gestauchte Blattfeder weicher. Baut man diesen Vibrationssensor 1 um 180 Grad gedreht ein, so dass die Gewichtskraft des Masseblocks 3 an den Blattfedern 5 zieht statt diese zu stauchen, so ändert sich die Resonanzfrequenz des Vibrationssensors 1. Diese Änderung der mechanischen Eigenschaften durch eine Änderung der Einbaulage des Vibrationssensors ist zu berücksichtigen. Hierauf wird auch im zweiten Ausführungsbeispiel noch eingegangen, das einen für den vertikalen Einbau (zur Messung vertikaler Vibrationen) optimierten Vibrationssensor erklärt.

Am Masseblock 3 ist dem Träger 4 gegenüber liegend eine Maßverkörperung 7 angebracht. Dabei kann es sich z.B. um ein kurzes Stück eines Maßbandes oder eines Maßstabes eines Positionsmessgerätes handeln, das eine Teilungsstruktur mit einer möglichst feinen Periode entlang der Messrichtung X trägt, und das auf den Masseblock 3 geklebt ist. Alternativ kann die Maßverkörperung direkt auf den Masseblock 3 aufgebracht sein, indem etwa mit lithographischen Verfahren ein periodisches Liniengitter auf den Masseblock 3 geschrieben wird.

Mit dem Rahmen 2 verbunden und der Maßverkörperung 7 gegenüberliegend ist ein Abtastkopf 6 zur optischen Abtastung der Maßverkörperung 7 mittels Licht angeordnet. Es eignen sich aber auch alle anderen Abtastprinzipien für Maßverkörperungen, solange sie nur eine ausreichende Genauigkeit gewährleisten. Als Beispiele seien hier noch magnetische, induktive oder kapazitive Abtastprinzipien und ihre entsprechenden Maßverkörperungen genannt.

Wird der Masseblock 3 und damit die Maßverkörperung 7 durch eine von außen eingeprägte Vibration ausgelenkt, so kann dies vom Abtastkopf 6 festgestellt werden. Üblicherweise erzeugt der Abtastkopf 6 mehrere gegeneinander phasenverschobene periodische Signale, deren Periodenzahl der Verschiebung proportional ist, und aus deren Phasenlage auf die Bewegungsrichtung geschlossen werden kann.

Die mit dem Abtastkopf 6 gewonnen elektrischen Signale können über einen Stecker 8 an eine Folgeelektronik übertragen und dort ausgewertet werden. Alternativ kann direkt im Abtastkopf eine Verschiebung berechnet und als digitaler Wert an die Folgeelektronik übertragen werden. Dort kann aus der Verschiebung die Vibration in Messrichtung X ermittelt werden.

Der Vibrationssensor 1 misst die Vibrationen einer Plattform, auf der der Vibrationssensor 1 montiert ist, und deren Schwingungen aktiv gedämpft werden sollen. Es ist daher darauf zu achten, dass das System aus Masseblock 3 und Blattfedern 5, das selbst ein schwingungsfähiges System mit einer bestimmten Eigenfrequenz ist, die zu messenden Vibrationen im interessierenden Frequenzbereich auch tatsächlich richtig darstellen kann. Hierfür ist die Übertragungsfunktion wesentlich, mit der Anregungen einer bestimmten Frequenz in Messwerte des Vibrationssensors 1 umgesetzt werden.

Die Masse des Masseblocks 3, die Dimensionierung der Blattfedern 5 und deren Vorbelastung in Längsrichtung sind Parameter, mit denen die Eigenfrequenz des Vibrationssensors 1 hin zu möglichst niedrigen Frequenzen beeinflusst werden kann. Die Übertragungsfunktion des Vibrationssensors 1 kann gemessen werden, um diese Übertragungsfunktion mittels eines sogenannten Stretching-Filters zu berücksichtigen. Dabei wird auch bei niedrigen Frequenzen unterhalb der Eigenfrequenz des Vibrationssensors 1 eine möglichst lineare Übertragungsfunktion erzielt, indem die Sensorsignale noch mit der inversen Übertragungsfunktion des Vibrationssensors 1 multipliziert werden. So können mit einem Vibrationssensor der hier beschriebenen Art mit einer Eigenfrequenz von 2 Hz noch Vibrationen bis hinunter zu etwa 0,4 Hz mit einem guten Signal/Rauschabstand gemessen werden.

Die Messung der Übertragungsfunktion (auch Identifikation genannt) gelingt besonders genau, wenn die Schwingungen des Masse-Feder-Systems gedämpft werden. Daher weist der Vibrationssensor 1 eine Schwingungsdämpfung auf, die auf den Masseblock 3 wirkt. Hierzu sind am Masseblock 3 flache Dämpfungsmagnete 9 angebracht, deren Feldlinien die elektrisch Leitfähige Rückwand des beispielsweise aus Aluminium gefertigten Rahmens 2 durchsetzen. Eine Bewegung des Masseblocks 3 relativ zum Rahmen 2 bewirkt Wirbelströme in der Rückwand des Rahmens 2, die den Bewegungen des Masseblocks 3 entgegen wirken und diese dämpfen. Die Magnete 9 sind dabei mit wechselnder Polarität angeordnet, so dass in einigem Abstand zum Vibrationssensor 1 keine Magnetfelder wirken.

Als Anhaltspunkte für die Dimensionierung eines Vibrationssensors 1 sei eine Masse von 0,7 kg für den Masseblock 3 genannt, und Blattfedern mit den Maßen 70 x 22 x 0,2 mm, sowie einem Elastizitätsmodul von 210e9 N/m². Die Dämpfung durch die Wirbelstrombremse sollte ca. 2 Ns/m betragen. Ein so aufgebauter Vibrationssensor 1 weist eine Eigenfrequenz von etwa 0,8 Hz auf.

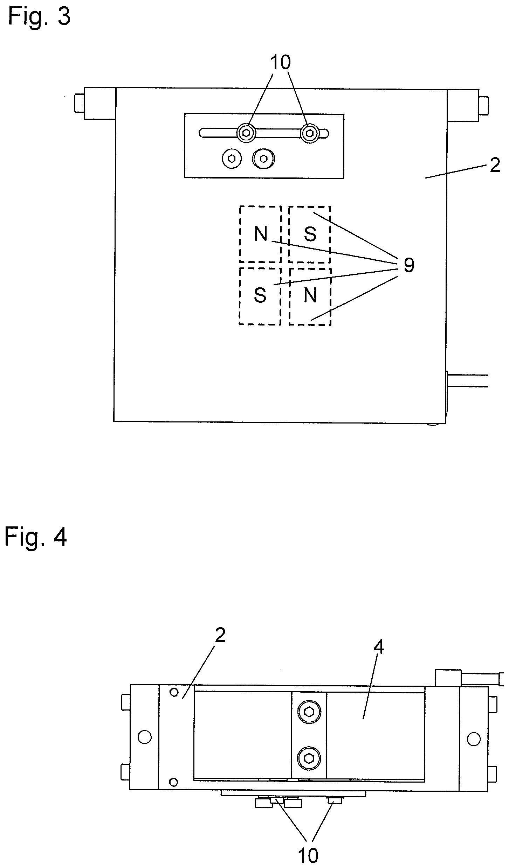

In der Figur 3 sind Schrauben 10 in der Rückwand des Rahmens 2 zu erkennen, die in das Innere des Rahmens 2 ragen und in Messrichtung X beidseits eines Schenkels des T-förmigen Trägers 4 liegen, gut zu erkennen in Figur 1. Sie dienen als Anschläge für den Träger 4 und begrenzen somit die Auslenkung des Masseblocks 3. Eine Beschädigung des Vibrationssensors 1 durch zu große Auslenkungen kann somit vermieden werden.

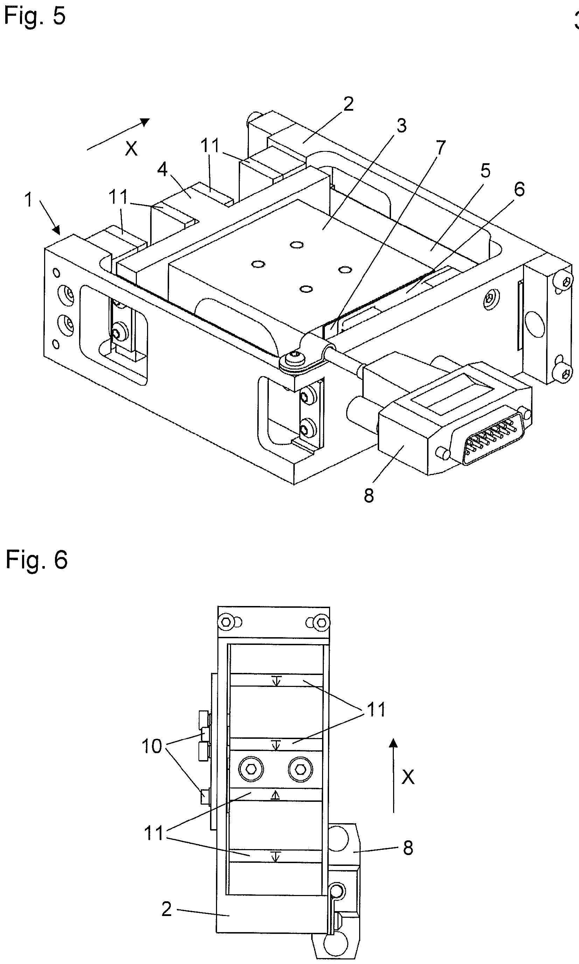

Die Figuren 5 und 6 zeigen verschiedene Ansichten eines zweiten Ausführungsbeispiels des Vibrationssensors 1, das sich für den vertikalen Einbau eignet, also für einen Vibrationssensor, der Vibrationen in vertikaler Richtung misst. Der Aufbau dieses Vibrationssensors entspricht in weiten Teilen dem des ersten Ausführungsbeispiels. Gleiche Bestandteile wie der Rahmen 2, der Masseblock 3 und die Blattfedern 5 sind mit den gleichen Bezugszeichen versehen wie im ersten Ausführungsbeispiel und werden hier nicht erneut erläutert.

Durch den vertikalen Einbau sind die Blattfedern 5 nun nicht wie zuvor beim horizontal eingebauten Vibrationssensor durch die Gewichtskraft des Masseblocks 3 auf Druck belastet ("buckling mode"), vielmehr wirkt die Gewichtskraft nun in Messrichtung X, die Blattfedern 5 werden also gebogen ("bending mode"). Hierdurch steigt die Eigenfrequenz des Vibrationssensors 1 etwas an. Zumindest ein Teil der Gewichtskraft des Masseblocks 3 kann aber wie zuvor von den Blattfedern kompensiert werden.

Da jedoch wie oben erklärt eine niedrige Resonanzfrequenz des Vibrationssensors 1 von Vorteil ist, kommen möglichst weiche Blattfedern 5 zum Einsatz, die von der Gewichtskraft des Masseblocks 3 evtl. zu stark gebogen werden. Im Design dieses zweiten Ausführungsbeispiels eines Vibrationssensors 1 für den vertikalen Einbau (im Sinne einer Messung der Vibration in vertikaler Richtung) sind daher Magnete 11 am Rahmen 2 und mittels des T-förmigen Trägers 4 am Masseblock 3 angebracht, die so zueinander ausgerichtet sind, dass sie zumindest einen Teil des Gewichts des Masseblocks 3 kompensieren können. Im Ausführungsbeispiel sind hierzu zwei Magnetpaare vorgesehen, wobei das in vertikaler Richtung unten liegende Magnetpaar so ausgerichtet ist, dass sich die beiden Magnete 11 abstoßen, während sich das oben liegende Magnetpaar anzieht. Beide Magnetpaare können also die Schwerkraft des Masseblocks 3 zumindest teilweise kompensieren, es können somit weichere Blattfedern 5 verwendet und die mechanische Resonanzfrequenz des Vibrationssensors 1 niedrig gehalten werden.

Ein Vorteil der hier gezeigten Anordnung von zwei Magnetpaaren besteht darin, dass die zusätzliche magnetische Federkonstante der beiden unteren, sich abstoßenden Magnete 11, die zur Federkonstanten der Blattfedern 5 addiert werden muss, und die die Resonanzfrequenz des Vibrationssensors 1 erhöhen würde, kompensiert werden kann durch eine negative magnetische Federkonstante des oberen, sich abstoßenden Magnetpaares. Durch eine geeignete Wahl der Luftspalte zwischen den Magneten 11, der Stärke der Magneten 11 und der Federkonstanten der Blattfedern 5 lässt sich ein vertikaler Vibrationssensor 1 mit einer niedrigen Resonanzfrequenz herstellen. Der Vibrationssensor 1 für die Messung vertikaler Vibrationen kann dann mit den gleichen Blattfedern 5 aufgebaut werden wie der Vibrationssensor des ersten Ausführungsbeispiels, der für die Messung horizontaler Vibrationen ausgelegt wurde.

Um die in jeder Serienfertigung vorhandene Streuung der Eigenschaften der verwendeten Bauteile zu berücksichtigen, sollte eine Möglichkeit zur Kalibrierung des Vibrationssensors vorhanden sein. So wird vorgeschlagen, die vertikale Position von wenigstens einem der Magnete 11 einstellbar auszuführen, z.B. von einem am Rahmen 2 befestigen Magnet 11. Dies könnte beispielsweise mittels Schrauben bewerkstelligt werden. Dadurch kann der Abstand eines Magnetpaares verändert werden. Trotz Schwankungen in der Stärke der verwendeten Magnete 11 und der Masse des Masseblocks 3 kann der Vibrationssensor 1 dann so eingestellt werden, dass die Magnete 11 gerade die Schwerkraft des Masseblocks 3 kompensieren, und dass der Masseblock 3 somit in seiner Ruhelage genau in der Mitte seines Bewegungsbereiches liegt.

Eine zum in den Figuren 5 und 6 gezeigten Ausführungsbeispiel alternative Lösung besteht darin, auf das untere, sich abstoßende Magnetpaar zu verzichten, und dafür etwas stärkere Blattfedern 5 zu verwenden. Die dadurch etwas erhöhte Federkonstante wird dann durch das obere Magnetpaar mit negativer magnetischer Federkonstante ausgeglichen, so dass auch auf diesem Wege ein Vibrationssensor 1 mit ausreichend niedriger Resonanzfrequenz aufgebaut werden kann.

Ein oder mehr Paare sich anziehender Magnete 11 mit einer negativen magnetischen Federkonstante können auch das erste Ausführungsbeispiel eines Vibrationssensors 1 für horizontale Vibrationen ergänzen und zu einer insgesamt niedrigeren Federkontante und damit niedrigeren Resonanzfrequenz des Vibrationssensors beitragen.

Aufgrund seiner mechanischen Eigenschaften eignen sich die hier beschriebenen Vibrationssensoren hervorragend für die Verwendung zur Messung und aktiven Dämpfung der Vibration einer Plattform, wobei die Signale des Vibrationssensors zur Ansteuerung der Aktoren zur aktiven Dämpfung der Plattform herangezogen werden. Die typischerweise im Bereich von wenigen Hertz liegenden Resonanzfrequenzen solcher Plattformen können mit den erfindungsgemäßen Vibrationssensoren sehr gut erfasst werden, da deren eigene Resonanzfrequenzen noch darunter liegen.

Auch die Verwendung der erfindungsgemäßen Vibrationssensoren zur Messung der Unwucht einer rotierenden Achse einer Werkzeugmaschine bietet sich an, da hier ähnlich niedrige Frequenzen erwartet und erfasst werden können, und da der Vibrationssensor eine für Positionsmessgeräte standardisierte Schnittstelle aufweist, wie sie an Werkzeugmaschinen vielfach zum Einsatz kommen. Die Vibrationssensoren können daher problemlos an gängige Numerische Steuerungen angeschlossen werden.

Ein Drehwerkstück wird in der Regel nicht exakt zentrisch auf dem Drehtisch einer Dreh-Fräsmaschine aufgespannt. Daher muss Größe und Orientierungswinkel der exzentrischen Masse von Werkstück und Spannmitteln vor der Drehbearbeitung ermittelt und durch Ausgleichsmassen kompensiert werden, der Drehtisch muss ausgewuchtet werden. Hierzu wird der erfindungsgemäße Vibrationssensor an geeigneter Stelle am Maschinengestell oder Schwenktisch eines Dreh-Schwenktisches befestigt. Auftretende Querkräfte werden im Vibrationssensor durch die Blattfedern 5 aufgenommen, die den Masseblock 3 in Messrichtung führen und ansonsten alle Freiheitsgrade sperren.

Die Signalqualität hinsichtlich Rauschen ist im Vergleich zu einem üblicherweise verwendeten Piezo-Sensor deutlich besser, was eine hohe Genauigkeit des Wuchtergebnisses erwarten lässt.

## Patentansprüche

1. Vibrationssensor mit einem Masseblock (3), der mittels wenigstens einer Feder (5) relativ zu einem Rahmen (2) in einer Messrichtung (X) beweglich gelagert ist, und mit einem Positionsmessgerät, wobei eine Verschiebung des Masseblocks (3) in Messrichtung (X) relativ zum Rahmen (2) mittels des Positionsmessgerätes erfassbar ist, wobei das Positionsmessgerät eine Maßverkörperung (7) und einen auf die Maßverkörperung (7) ausgerichteten Abtastkopf (6) umfasst, wobei die eine dieser beiden Komponenten am Masseblock (3), die andere am Rahmen (2) befestigt ist, wobei der Masseblock (3) von zwei Blattfedern (5) gegenüber dem Rahmen (2) in Messrichtung (X) beweglich gehalten ist, während alle übrigen Freiheitsgrade des Masseblocks (3) durch die Blattfedern (5) gesperrt sind, wobei die Blattfedern (5) so angeordnet sind, dass sie bei horizontalem Einbau des Vibrationssensors (1) zur Messung in horizontaler Messrichtung (X) durch das Gewicht des Masseblocks (3) in ihrer Längsrichtung entweder auf Druck oder auf Zug belastet sind, **dadurch gekennzeichnet, dass** der Vibrationssensor (1) Dämpfungsmagnete (9) aufweist, die die Bewegungen des Masseblocks (3) durch eine Wirbelstrombremsung dämpfen, und dass die Dämpfungsmagnete (9) auf dem Masseblock (3) mit unterschiedlicher magnetischer Ausrichtung angeordnet und auf eine elektrisch leitfähige Wand des Rahmens (2) ausgerichtet sind.

2. Vibrationssensor nach Anspruch 1, **dadurch gekennzeichnet, dass** die Maßverkörperung (7) am Masseblock (3) angeordnet ist, und der Abtastkopf (6) am Rahmen (1) angeordnet ist.

3. Vibrationssensor nach Anspruch 1, oder 2, **dadurch gekennzeichnet, dass** der Abtastkopf (6) die Maßverkörperung (7) mittels Licht abtastet.

4. Vibrationssensor nach einem der vorhergehenden Ansprüche, **dadurch gekennzeichnet, dass** die Messrichtung (X) eine Komponente in Richtung der Schwerkraft aufweist, wobei zumindest ein Teil der Schwerkraft des Masseblocks (3) durch eine Anordnung von Magneten (11) kompensiert ist.

5. Vibrationssensor nach Anspruch 4, **dadurch gekennzeichnet, dass** zumindest zwei Magnete (11) so am Rahmen (2) und am Masseblock (3) befestigt sind, dass die Schwerkraft des Masseblocks (3) durch eine anziehende Kraft zwischen den Magneten (11) zumindest zum Teil kompensiert ist.

6. Vibrationssensor nach Anspruch 4 oder 5, **dadurch gekennzeichnet, dass** durch ein Paar der Magnete (11) die Schwerkraft des Masseblocks (3) mittels einer abstoßenden Kraft teilweise kompensiert ist, und durch ein weiteres Paar der Magnete (11) die Schwerkraft des Masseblocks (3) mittels einer anziehenden Kraft teilweise kompensiert ist.

7. Vibrationssensor nach einem der Ansprüche 4 - 6, **dadurch gekennzeichnet, dass** eine vertikale Position von wenigstens einem der Magnete (11) einstellbar ist.

8. Vibrationssensor nach einem der Ansprüche 4 - 7, **dadurch gekennzeichnet, dass** ein nicht durch die Magnete (11) kompensierter Anteil der Schwerkraft des Masseblocks (3) durch eine Auslenkung der Blattfedern (5) und die daraus resultierende Federkraft kompensiert ist.

9. Verwendung eines Vibrationssensors nach einem der vorhergehenden Ansprüche, zur Messung der Vibration einer Plattform, wobei die Signale des an der Plattform montierten Vibrationssensors (1) zur aktiven Dämpfung von Vibrationen der Plattform herangezogen werden.

10. Verwendung eines Vibrationssensors nach einem der Ansprüche 1 - 7, zur Messung der Unwucht einer rotierenden Achse einer Werkzeugmaschine.

## Claims

1. Vibration sensor with a mass block (3) which is mounted movably in a measuring direction (X) by means of at least one spring (5) relative to a frame (2) and with a position measuring instrument, wherein a movement of the mass block (3) in the measuring direction (X) relative to the frame (2) can be captured by means of the position measuring instrument, wherein the position measuring instrument comprises a solid gauge (7) and a scanning head (6) oriented to the solid gauge (7), wherein one of these two components is fastened to the mass block (3), the other to the frame (2), wherein the mass block (3) is held movably in the measuring direction (X) by two leaf springs (5) with respect to the frame (2), while all other degrees of freedom of the mass block (3) are prevented by the leaf springs (5), wherein the leaf springs (5) are so arranged that when the vibration sensor (1) is installed horizontally for measuring in the horizontal measuring direction (X) they are stressed in either compression or tension in their longitudinal direction by the weight of the mass block (3), **characterized in that** the vibration sensor (1) comprises damping magnets (9) which damp the movements of the mass block (3) through an eddy current braking, and that the damping magnets (9) are arranged on the mass block (3) with different magnetic alignments and are aligned to an electrically conductive wall of the frame (2).

2. Vibration sensor according to Claim 1, **characterized in that** the solid gauge (7) is arranged on the mass block (3), and the scanning head (6) is arranged on the frame (1).

3. Vibration sensor according to Claim 1 or 2, **characterized in that** the scanning head (6) senses the solid gauge (7) by means of light.

4. Vibration sensor according to one of the preceding claims, **characterized in that** the measuring direction (X) has a component in the direction of the weight force, wherein at least a part of the weight force of the mass block (3) is compensated for by an arrangement of magnets (11),

5. Vibration sensor according to Claim 4, **characterized in that** at least two magnets (11) are fastened to the frame (2) and the mass block (3) in such a way that the weight force of the mass block (3) is at least partially compensated for by an attractive force between the magnets (11).

6. Vibration sensor according to Claim 4 or 5, **characterized in that** the weight force of the mass block (3) is partially compensated for by means of a repulsive force due to one pair of the magnets (11), and the weight force of the mass block (3) is particularly compensated for by means of an attractive force due to a further pair of the magnets (11).

7. Vibration sensor according to one of Claims 4 - 6, **characterized in that** a vertical position of at least one of the magnets (11) is adjustable.

8. Vibration sensor according to one of Claims 4 - 7, **characterized in that** a component of the weight force of the mass block (3) that is not compensated for by the magnets (11) is compensated for by a deflection of the leaf springs (5) and the spring force resulting therefrom.

9. Use of a vibration sensor according to one of the preceding claims for measuring the vibration of a platform, wherein the signals of the vibration sensor (1) mounted on the platform arc employed for active damping of vibrations of the platform.

10. Use of a vibration sensor according to one of Claims 1 - 7 for measuring the imbalance of a rotating axis of a machine tool.

## Revendications

1. Capteur de vibrations avec un bloc de masse (3), qui est monté de façon mobile par rapport à un cadre (2) dans une direction de mesure (X) au moyen d'au moins un ressort (5), et avec un appareil de mesure de position, dans lequel un déplacement du bloc de masse (3) par rapport au cadre (2) peut être détecté au moyen de l'appareil de mesure de position, dans lequel l'appareil de mesure de position comprend une base de mesure (7) et une tête de lecture (6) dirigée vers la base de mesure (7), dans lequel l'un de ces deux composants est fixé au bloc de masse (3) et l'autre au cadre (2), dans lequel le bloc de masse (3) est maintenu de façon mobile dans la direction de mesure (X) par rapport au cadre (2) au moyen de deux ressorts à lame (5), tandis que tous les autres degrés de liberté du bloc de masse (3) sont bloqués par les ressorts à lame (5), dans lequel les ressorts à lame (5) sont disposés de telle manière que lors du montage horizontal du capteur de vibrations (1) pour la mesure dans une direction de mesure horizontale (X) ils soient chargés soient en compression soit en traction dans leur direction longitudinale par le poids du bloc de masse (3), **caractérisé en ce que** le capteur de vibrations (1) présente des aimants d'amortissement (9), qui amortissement les mouvements du bloc de masse (3) par un freinage par courants de Foucault, et **en ce que** les aimants d'amortissement (9) sont disposés sur le bloc de masse (3) avec une orientation magnétique différente et sont orientés vers une paroi électriquement conductrice du cadre (1).

2. Capteur de vibrations selon la revendication 1, **caractérisé en ce que** la base de mesure (7) est disposée sur le bloc de masse (3), et la tête de lecture (6) est disposée sur le cadre (1).

3. Capteur de vibrations selon une revendication 1 ou 2, **caractérisé en ce que** la tête de lecture (6) balaie la base de mesure (7) au moyen de lumière.

4. Capteur de vibrations selon l'une quelconque des revendications précédentes, **caractérisé en ce que** la direction de mesure (X) présente une composante dans la direction de la gravité, dans lequel au moins une partie de la gravité du bloc de masse (3) est compensée par un agencement d'aimants (11).

5. Capteur de vibrations selon la revendication 4, **caractérisé en ce qu'**au moins deux aimants (11) sont fixés au cadre (2) et au bloc de masse (3), de telle manière que la gravité du bloc de masse (3) soit compensée au moins en partie par une force d'attraction entre les aimants (11).

6. Capteur de vibrations selon une revendication 4 ou 5, **caractérisé en ce que** la gravité du bloc de masse (3) est compensée en partie par une paire des aimants (11) au moyen d'une force de répulsion et la gravité du bloc de masse (3) est compensée en partie par une autre paire des aimants (11) au moyen d'une force d'attraction.

7. Capteur de vibrations selon l'une quelconque des revendications 4 à 6, **caractérisé en ce qu'**une position verticale d'au moins un des aimants (11) est réglable.

8. Capteur de vibrations selon l'une quelconque des revendications 4 à 7, **caractérisé en ce qu'**une partie de la gravité du bloc de masse (3) non compensée par les aimants (11) est compensée par une déformation des ressorts à lame (5) et la force élastique qui en résulte.

9. Utilisation d'un capteur de vibrations selon l'une quelconque des revendications précédentes, pour la mesure de la vibration d'une plate-forme, dans laquelle les signaux du capteur de vibrations (1) monté sur la plate-forme sont utilisés pour l'amortissement actif de vibrations de la plate-forme.

10. Utilisation d'un capteur de vibrations selon l'une quelconque des revendications 1 à 7 pour la mesure du balourd d'un axe rotatif d'une machine-outil.
